(19) Europäisches Patentamt
European Patent Office
Office européen des brevets

(11) **EP 4 386 210 A1**

(12) **EUROPEAN PATENT APPLICATION**

(43) Date of publication:
**19.06.2024 Bulletin 2024/25**

(21) Application number: **22306872.7**

(22) Date of filing: **14.12.2022**

(51) International Patent Classification (IPC):
**F04D 1/00** $^{(2006.01)}$    **F04D 15/00** $^{(2006.01)}$
**F04D 29/22** $^{(2006.01)}$

(52) Cooperative Patent Classification (CPC):
**F04D 1/00; F04D 15/0088; F04D 29/2205;**
F04D 15/0272; F05D 2230/72; F05D 2240/307;
F05D 2260/80; F05D 2260/821; F05D 2270/3011;
F05D 2270/3013; F05D 2270/3061; F05D 2270/335

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Schneider Toshiba Inverter Europe SAS**
**27120 Pacy-sur-Eure (FR)**

(72) Inventor: **EJJABRAOUI, Kamal**
**27930 GRAVIGNY (FR)**

(74) Representative: **Plasseraud IP**
**66, rue de la Chaussée d'Antin**
**75440 Paris Cedex 09 (FR)**

(54) **METHOD FOR IDENTIFICATION OF IMPELLER WEAR AND EXCESSIVE WEAR-RING CLEARANCE IN CENTRIFUGAL PUMPS**

(57)     Method for determining mechanical degradation of parts of a centrifugal pump having a fluid inlet, an impeller, and a fluid outlet, comprising:

calculating at least one of a wear-ring clearance effect and an impeller wear effect where calculating said wear-ring clearance wear effect uses:

using measurements of (200) an actual pump flow rate Qp and actual pump power $Pwp$ (121), calculating (210) an internal flow rate of the pump $Qp_{Pwp}$ (132), calculating (220) the mechanical power $Pw_{Qp}$ (131) that should be used if the pump worked as specified in the theoretical curve, calculating (250) a difference between a theoretical Head and an internal Head $Hp_{th}$- $Hp_{Pwp}$ to obtain the loss of Head due to the wear-ring clearance;

and where calculating said impeller wear effect is done using:

measuring (300) an actual input pressure pin, an actual output pressure pout and an actual pump power $Pwp,$ calculating (310) a theoretical flow rate $QpPwp$ corresponding to the measured mechanical power $Pwp$ (132), calculating a theoretical Pump Head $HpPwp,$ calculating (330) the actual Pump Head $Hp$ from the actual input pressure $p_{in}$, and the actual output pressure $p_{out}$ and a pumped fluid density, calculating a difference between said theoretical pump head and said actual pump Head $HpPwp$ - $Hp$ to obtain the loss of head due to the impeller wear.

FIG. 4

## Description

### Field of the invention

The present disclosure concerns pumps and more precisely centrifugal pumps and their maintenance.

### Background

In most of the applications, pumps are used in different conditions extremely unfavorable for the health of the pump. In fact, the typology of the transported fluid such as abrasiveness, corrosiveness, the operation of the pump system in a not preferred work area of the pump and also cavitation accelerates the degradation of the pump mechanical parts such as wheel, mechanical seal, wear-ring clearance and leads to a decrease of the pump performances and of the process using such pump.

### Summary of the invention

The objective of the present disclosure is to propose a method providing a solution to identify the impact of excessive wear-ring clearance, excessive clearance between the tips of the blades of the impeller and the pump body, caused by wear of the blade tips and the impact of the impeller wear and on the whole performance of the centrifugal pump. The method considers the initial status of the pump from the datasheet of the pump as an initial characteristic and associates the evolution of the pump curves to an evolution of the internal mechanical part of the pump. The method uses specific calculations which define the impact of the impeller wear and the impact of an excessive wear-ring clearance on the whole pump performance.

More precisely the present disclosure proposes a method for determining mechanical degradation of parts of a centrifugal pump having a fluid inlet, an impeller, and a fluid outlet, said method comprising:
calculating at least one of a wear-ring clearance effect and an impeller wear effect.

Calculating said wear-ring clearance effect is done through:

- measuring an actual pump flow rate $Qp$ and actual pump power $Pwp$,
- calculating an internal flow rate of the pump $Qp_{Pwp}$ through projecting said actual pump power $Pwp$ on a theoretical Pump Mechanical power versus Pump Flow rate curve at iso mechanical power,
- calculating the mechanical power $Pw_{Qp}$ that should be used if the pump worked as specified in the theoretical curve through projecting said actual pump flow rate on said theoretical Pump Mechanical Power versus Pump Flow rate curve at iso flow rate,
- applying the measured flow rate $Qp$ on a theoretical Pump Head versus Pump Flow rate curve to obtain a theoretical Head $Hp_{th}$,
- applying the internal flow rate of the pump $Qp_{Pwp}$ on said theoretical Pump Head versus Pump Flow rate curve to obtain an internal Head $Hp_{Pwp}$,
- calculating a difference between said theoretical Head and said internal Head $Hp_{th}$ - $Hp_{Pwp}$ to obtain the loss of Head due to the wear-ring clearance;

Calculating said impeller wear effect is done through:

- measuring an actual input pressure $p_{in}$, an actual output pressure $p_{out}$ and an actual pump power $Pwp$,
- calculating a theoretical flow rate $Qp_{Pwp}$ corresponding to the measured mechanical power $Pwp$ on a theoretical pump characteristic Pump Power versus Pump Flow rate curve,
- projecting such theoretical flow rate $Qp_{Pwp}$ on a theoretical Pump Head versus Pump Flow rate curve 15 at iso-pump flow rate $\Delta Q = 0$ to obtain a theoretical Pump Head $Hp_{Pwp}$,
- calculating an actual Pump Head $Hp$ from the actual input pressure $p_{in}$, and the actual output pressure $p_{out}$ and a pumped fluid density,
- calculating a difference between said theoretical pump head and said actual pump Head $Hp_{Pwp}$ - $Hp$ to obtain the loss of head due to the impeller wear.

The method may comprise calculating a flow rate inside the pump

$$Q_{p_{pump}} = Qp_{Pwp} = Qp + \Delta Q,$$

where $\Delta Q$ is the additional flow rate due to the increasing of the wear-ring clearance compared to the initial status of the pump that is provided by the theoretical Pump Head versus Flow rate curve, and considering that at the pump head $Hp_{Pwp}$ corresponding to the measured power and at iso-Pump Head $H = H_{th} = Hp_{Pwp}$ the Hydraulic efficiency being equal to 1, setting a hydraulic efficiency at:

$$\eta_{HY} = \frac{H}{H_{th}} = 1 \, .$$

The method may then comprise:

- calculating a mechanical efficiency:

$$\eta_m = \frac{P_I}{P_s} = \frac{\rho.g.Hp_{Pwp}(Q_p + \Delta Q)}{Pw_p}$$

- calculating a volumetric efficiency:

$$\eta_v = \frac{Q_p}{(Q_p + \Delta Q)}$$

- and calculating the efficiency of the pump with pump wear-ring clearance impact

$$\eta_{wearRing} = \eta_m \times \eta_{HY} \times \eta_v = \frac{\rho.g.Hp_{Pwp}.Q_p}{Pw_p}$$

The method may also comprise calculating a theoretical efficiency:

$$\eta_{theoretical} = \frac{\rho.g.H_{P_{th}}.Qp}{Pw_{Qp}}$$

where $Hp_{th} = Hp_{Qp}$ the theoretical head calculated with the theoretical pump curve (Head vs. Flow rate) using the measured flow rate and $Pw_{Qp}$ is the calculated power with the theoretical curve Power vs. Flow rate within the measured flow rate
and calculating an impact of the Excessive wear-ring clearance on the overall pump as:

$$\eta_{WearRingImpact} = \frac{\eta_{wearRing} - \eta_{theoretical}}{\eta_{theoretical}}$$

The method may also comprise calculating an impeller wear impact at iso-pump flow rate $\Delta Q = 0$ with

calculating a mechanical efficiency:

$$\eta_m = \frac{P_I}{P_s} = \frac{\rho.g.Hp_{th}(Qp + \Delta Q)}{Pw_{Qp}} = \frac{\rho.g.Hp_{th}.Qp}{Pw_{Qp}}$$

and

calculating the efficiency of the pump with impeller wear impact

$$\eta_{impellerWear} = \eta_m \times \eta_{HY} \times \eta_v = \frac{\rho.g.\big(Hp_{th} - (Hp_{pwp} - Hp)\big).Qp}{Pw_{Qp}}$$

where

$$\eta_{HY} = \frac{Hp_{th} - (Hp_{pwp} - Hp)}{Hp_{th}}$$

and

$$\eta_v = 1$$

and $Pw_{Qp}$ is the power calculating with the projection of the measured flow rate Qp on the theoretical Pump Power versus Pump Flow rate.

The method may also comprise calculating the impact of the impeller wear on the overall pump wear as:

$$\eta_{ImpellerWearImpact} = \frac{\eta_{impellerWear} - \eta_{theoretical}}{\eta_{theoretical}}$$

where

$$\eta_{theoretical} = \frac{\rho.g.Hp_{th}.Qp}{Pw_{Qp}}$$

where the theoretical head $Hp_{th}$ is $Hp_{Qp}$ calculated with the theoretical pump curve Head vs. Flow rate using the measured flow rate and $Pw_{Qp}$ is the calculated power with the theoretical curve Power vs. Flow rate within the measured flow rate.

In a preferred embodiment, the method is repeated from time to time to obtain a plurality of measurements of the global efficiency of the pump.

The method may then comprise identifying with said program an evolution of a pump wear-ring clearance evolution through calculating said wear-ring clearance effect through measuring the initial power and flow rate of the pump at a time t0, calculating the initial Head of the pump $Hp_{Pwp}$, calculating the initial loss of Head $(Hp_{th} - Hp_{Pwp})_{t0}$, measuring from time to time $t_n = t_{n-1} + \Delta t$ with the pump in use the power and flow rate of the pump and calculating the head and loss of Head due to the wear-ring clearance, comparing the obtained wear-ring clearance effect $(Hp_{th} - Hp_{Pwp})_{tn}$ at a time $t_n$ with the initial Head loss at t0 to obtain a wear-ring clearance evolution of the pump.

Such method may comprise a program designed to detect an evolution of a pump impeller wear evolution through calculating said impeller wear effect through measuring an initial input pressure $p_{int0}$, an actual output pressure $p_{outt0}$ and an initial pump power $Pwp_{t0}$ of the pump at a time t0, calculating the initial Head of the pump $Hp_{Pwp}$ at iso-pump flow rate $\Delta Q = 0$, calculating the initial loss of Head ($Hp_{Pwp} - Hp)_{t0}$, measuring from time to time $t_n = t_{n-1} + \Delta t$ with the pump in use the input pressure $p_{intn}$, output pressure $p_{outtn}$ and pump power $Pwp_{tn}$ of the pump and calculating the head and loss of Head due to the impeller wear at iso-pump flow rate $\Delta Q = 0$, comparing the obtained impeller wear ($Hp_{Pwp} - Hp)t_n$ with the initial Head loss to obtain a impeller wear evolution of the pump.

In an advantageous embodiment, the measurements of the method are done in real time during operation of the pump.

The method may comprise comparing of an actual flow rate with at least one customer defined flow rate lower limit and providing a warning signal in case of detection of a flow rate lower than said lower limit.

The method may also comprise a calculation of the impact of the degradation on the efficiency of said impeller and provision of ageing data comprising flow rate reduction and/or head reduction.

The method may also comprise a calculation of the impact of such degradation on the energy consumption of the pump.

The method may also comprise creating warning signals upon detection of defined wear-ring clearance and/or impeller wear for providing data for predictive maintenance.

The method may comprise an initialization step where said theoretical Pump mechanical Power versus Flow rate curve, said theoretical Head versus Flow rate curve from the pump manufacturer as initial theoretical pump data are entered in a calculation program executing the method.

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.

**Brief description of the drawings**

A detailed description of exemplary embodiments of the invention will be discussed hereunder in reference to the attached drawings where:

Figure 1: shows a side cut view of a centrifugal pump;
Figure 2A: shows a Pump Mechanical Power versus Pump Flow Rate curve for a new and a damaged pump;
Figure 2B: shows a Pump Head versus Pump flow rate curve for a new and a damaged pump;
Figure 3: shows degradation curves of a pump during part of its life;
Figure 4: shows a simplified flowchart of a first measurement of the disclosure;
Figure 5: shows a simplified flowchart of a second measurement of the disclosure;
Figure 6A and 6B: shows a simplified flowcharts of other calculations of the disclosure;
Figure 7: shows a simplified flowchart of a first method of measuring evolution of a pump according to the disclosure;
Figure 8: shows a simplified flowchart of a second method of measuring evolution of a pump according to the disclosure;

**Detailed description of embodiments of the invention**

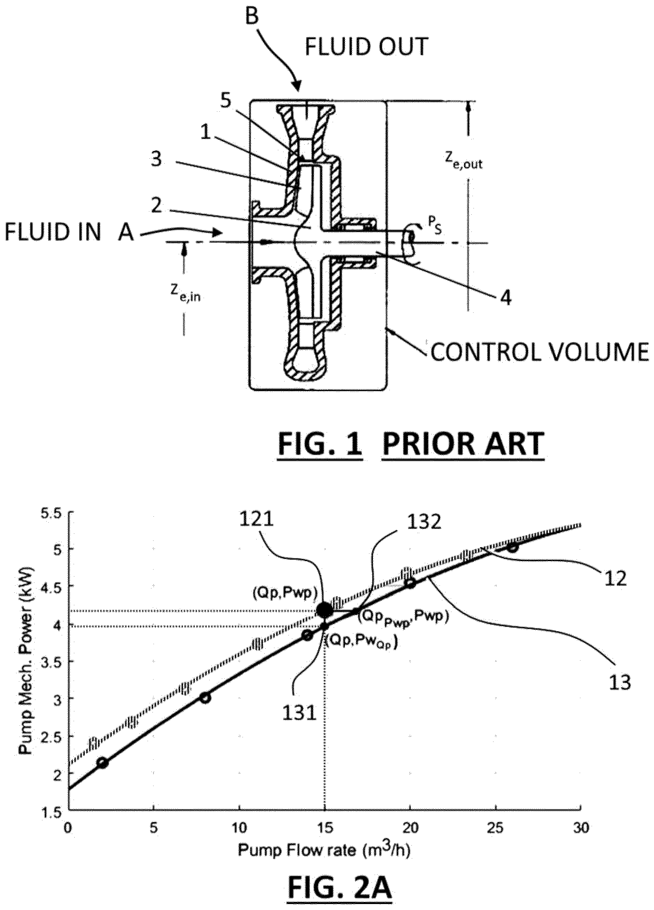

The present invention concerns a method for identifying the impact of an impeller wear and excessive wear-ring clearance on the whole performance of a centrifugal pump such as shown in figure 1 having a body 1, an impeller 2 with impeller blades 3 and impeller axis 4.

Centrifugal pumps are working in different hydraulic applications, from clean water to wastewater applications. It transports different kinds of fluid with different properties and densities. During their operation, the different mechanical parts (impeller, blades, wear-ring, diffuser ...) that compose a centrifugal pump suffer, and they can wear differently depending on the causes: cavitation, corrosion, abrasion, abnormal usage...; The degradation of those parts generates internal losses and decreases the performance of such pumps. The losses can be quantified in terms of flow rate and losses in terms of pump total dynamic head capacity.

Three major losses inside a centrifugal pump are considered:

Friction losses
Shock losses
Leakage losses

The leakage losses are associated with an excessive wear-ring clearance that is the wear of the blades tips and wear-ring which causes an excessive clearance 5 inside the carter of the pump. Such excessive clearance increases the flow rate recirculating between the rotating and stationary parts of the pump stage. Because of such clearance, the pump is rejecting a flow rate quantity lower than what has been stirred inside the pump. The flow rate inside the pump is higher than what can be measured in the discharge line of the pump.

Friction losses and shock losses are associated with the wear of the impeller and diffuser because they mainly participate in decreasing of the pump head at a same pumped flow due to losses by friction on the walls of the blades 3 and by shock due to the modification of angles of attack of worn blades.

Friction loss is prominent at high flow rates. In contrast, leakage loss is more present at relatively low flow rates. Shock loss takes place when the liquid flow rate differs from the designed flow rate.

The objective of the present disclosure is to provide a method to identify the impact of both the impeller wear and the excessive wear-ring clearance on the overall performance of a centrifugal pump having a fluid inlet A, an impeller 2 and a fluid outlet B.

The first law of thermodynamics provides

$$P_s = \dot{m}\left[\left(h + \frac{V^2}{2} + gZ_e\right)_{out} - \left(h + \frac{V^2}{2} + gZ_e\right)_{in}\right]$$

With

$$h = u + \frac{p}{\rho}$$

in which:

Ps is the motor shaft power
m is the mass flow rate (kg/s)
u is the internal energy (kcal/kg multiplied by $J.m^2/s^2$)
p is the static pressure (Pa = $N/m^2$)
$\rho$ is the fluid mass density
V is the absolute velocity of fluid (m/s)
g is the acceleration due to gravity (9.80665 $m/s^2$)
Ze is the elevation height at the point of interest (m)

The shaft power is commonly expressed in terms of "Head" and mass flow rate as in the following equation:

$$\frac{P_s}{\dot{m}} = g\Delta H + \Delta u$$

$$H = \frac{p}{\rho g} + \frac{V^2}{2g} + Z_e$$

where ΔH is the Head across the pump (m)

The change in H is called the "Head" ΔH of the pump; and because H includes the velocity head $\frac{V^2}{2g}$ and the elevation head Ze at the point of interest, ΔH is often called the "total dynamic head". ΔH is often abbreviated to simply "H" and is the increase in height of a column of liquid that the pump would create if the static pressure head $\frac{p}{\rho g}$ and the velocity head $\frac{V^2}{2g}$ were converted without loss into elevation head Ze their respective locations at the inlet A to and outlet B from the control volume.
Not all the mechanical input energy per unit mass ends up as useful pump output energy per unit mass *gΔH*. This is expressed by:

$$\frac{P_s}{\dot{m}} > g\Delta H \text{ or } \eta < 1$$

The overall pump efficiency $\eta$ is expressed by the following equation:

$$\eta = \frac{g\Delta H \dot{m}}{P_s}$$

The mass flow rate m can be expressed by:

$$\dot{m} = \rho Q$$

Where:
$Q$ is the flow rate (m$^3$/s).
Then:

$$\eta = \frac{P_I}{P_s} \times \frac{g\Delta H(\dot{m} + \dot{m}_{Le})}{P_I} \times \frac{\dot{m}}{(\dot{m} + \dot{m}_L)}$$

Where:

$$P_I = g\Delta H_{th}(\dot{m} + \dot{m}_{Le})$$

In which $H_{th}$ is the theoretical Head without losses inside the pump,
and Le are the leakages which provides:

$$\eta = \frac{P_I}{P_s} \times \frac{\Delta H}{\Delta H_{th}} \times \frac{Q}{(Q + Q_L)} = \eta_m \times \eta_{HY} \times \eta_v$$

The mechanical efficiency is defined as:

$$\eta_m = \frac{P_I}{P_s} = \frac{P_s - P_D}{P_s}$$

The hydraulic efficiency is defined as:

$$\eta_{HY} = \frac{\Delta H}{\Delta H_{th}} = \frac{\Delta H_i - \sum H_L}{\Delta H_{th}}$$

where the initial head $Hi$ is the theoretical head $H_{th}$ and where $H_L$ corresponds to losses,
**[0038]** The volumetric efficiency is defined as:

$$\eta_v = \frac{Q}{(Q + Q_{Le})}$$

The theoretical head is defined by the following equation:

$$H_{th} = \frac{(2\pi R_2)^2}{g} \times N^2 + \frac{2\pi R_2}{gS_2} \times \frac{\cos(\beta_2)}{|\sin(\beta_2)|} \times N \times q_v$$

An equation that defines wear of a pump is:

$$H_r = H_{th} - H_{friction} - H_{Shock} - H_{Leakage} - H_{recirculation} - H_{diffuser} - H_{disk}$$

Pump manufacturers provide pump curve datasheets which are already considering initial losses of a pump due to friction, shock, and leakage inside the pump as manufactured. As known in the art, the pump curves are different from the Euler theoretical head curve. In the present disclosure, the initial status of the pump as in the datasheet becomes the theoretical characteristic of the pump on which calculations are based. The evolution of the pump curve starting from the datasheet corresponds to an evolution of the internal mechanical parts of the pump.

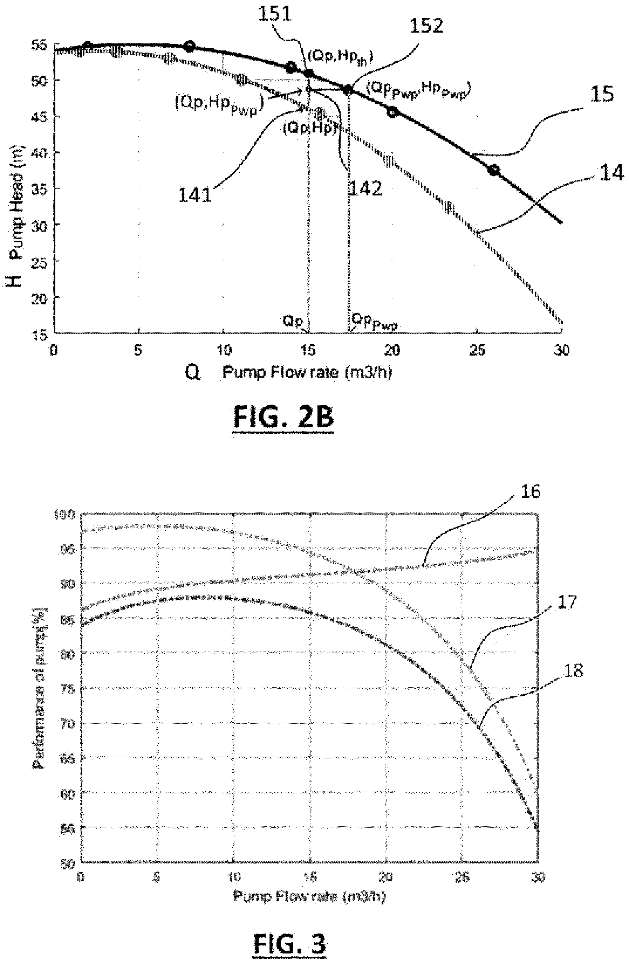

The present disclosure provides an identification of the impact of the impeller wear and excessive wear-ring clearance on the whole pump performance. A purpose of the present disclosure is to detect the evolution of both mechanical parts inside the pump and how they impact the performance and energy consumption of the pump. The proposed method is based on a model of efficiency and a method to separate impeller wear and excessive wear-ring clearance based on Mechanical Power versus Flow Rate curves such as in figure 2A which shows an actual pump curve 12 in dotted line and a theoretical or manufacturer curve 13 in solid line and based on Pump Head versus Flow Rate curves such as in figure 2B which shows an actual pump curve 14 in dotted lines and a theoretical or manufacturer curve 15 in solid line.

Considering an operating point measured on an example of installation in use for pumping water in which a Pump flow rate is for example 15 m3/h, a Pump Head: 46 m, a Pump Mechanical power: 4.18 kW. A wear-ring clearance impact can be seen on the characteristic "Pump mechanical power vs. Flow rate" of figure 2A where, at the operating point 121 having a pump flow rate Qp, and a measured power $Pwp$, such power $Pwp$ is higher than the theoretical power $Pw_{Qp}$ on the theoretical Mechanical Power versus Pump Flow rate curve 13 corresponding to Qp at point 131. In such curve, $Qp_{Pwp}$ is the projection of the measured power on the theoretical Mechanical Power versus Pump Flow rate curve 13 at point 132 allowing calculate the flow rate that the pump sees internally including the internal recirculation due to wear-ring clearance. $Pw_{Qp}$ is the projection of the measured flow rate 121 on the theoretical Mechanical Power versus Pump Flow rate curve 13 and corresponds to the mechanical power that should be given if the pump behaves as given by the pump manufacturer. It should be noted that the actual pump curve 12 is shown for a better understanding of the phenomenon but only the current working point $Qp, Pwp$ is needed for the calculation. With a projection of theses operating points on the characteristics Pump Head versus Pump flow rate in figure 2B where the theoretical curve 15 is the solid line and the actual pump curve 14 is the dotted line for reference, it can be observed that the impact of the internal re-circulation in the pump implies a drop of the pump head $Hp_{pwp}$ at point 142 from the theoretical pump head $Hp_{th}$ that should be obtained at the measured flow rate Qp at point 151. This provides the impact of the wear-ring clearance on the pump head because the pump doesn't see the flow rate measured externally but the flow rate inside the pump which is higher than measured:

$$Q_{p_{pump}} = Q_{p_{Meas}} + \Delta Q$$

Where:

$$Q_{p_{pump}} = Qp_{Pwp}$$

$$Q_{p_{Meas}} = Q_p$$

$\Delta Q$ is the additional flow rate due to the increasing of the wear-ring clearance compared to initial status of the pump that is provided by the Manufacturer.

To identify the impact of the wear-ring clearance on the overall efficiency of the pump, it can be considered that for the same pump head $Hp_{Pwp}$ corresponding to the measured power, there is, according to figure 2B, a point at $(Qp, HP_{Pwp})$ and a point at $(Qp_{Pwp}, Hp_{Pwp})$. Then, because at Iso-Pump Head: $\Sigma\, H_L = 0$, the Head $H = H_{th} = Hp_{Pwp}$. In consequence, the measures necessary to determine the wear-ring clearance impact in such case are flow rate and mechanical power.

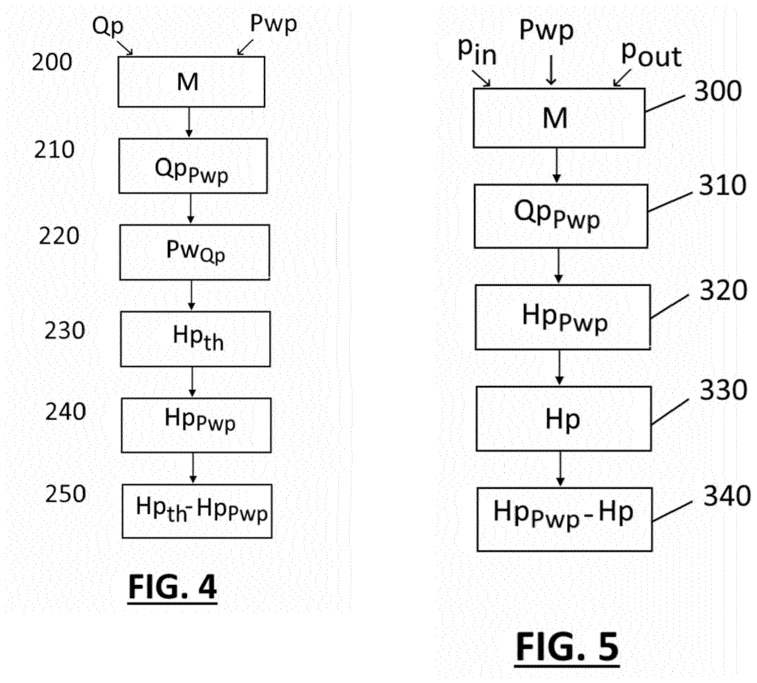

The method to determine the wear-ring clearance effect shown on the flowchart of figure 4 uses:

- measuring 200 an actual pump flow rate $Qp$ and actual pump power $Pwp$ 121,
- calculating 210 an internal flow rate of the pump $Qp_{Pwp}$ 132 through projecting said actual pump power $Pwp$ on a theoretical Pump Mechanical power versus Pump Flow rate curve (13) at iso mechanical power,
- calculating 220 the mechanical power $Pw_{Qp}$ 131 that should be present if the pump works as specified in the theoretical curve through projecting said actual pump flow rate on said theoretical Pump Mechanical Power versus Pump Flow rate curve 13 at iso flow rate,
- applying 230 the measured flow rate $Qp$ on a theoretical Pump Head versus Pump Flow rate curve 15 to obtain a theoretical Head $Hp_{th}$ 151,
- applying 240 the internal flow rate of the pump $Qp_{Pwp}$ on said theoretical Pump Head versus Pump Flow rate curve

15 to obtain an internal Head $Hp_{Pwp}$ 152,

- calculating 250 a difference between said theoretical Head and said internal Head $Hp_{th}$- $Hp_{Pwp}$ to obtain the loss of Head due to the wear-ring clearance.

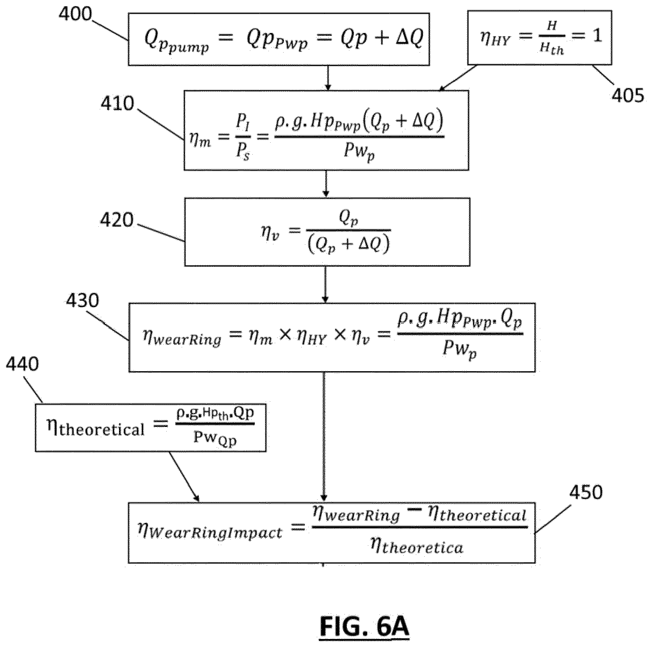

In figure 6A is a method that comprises calculating 400 a flow rate inside the pump

$$Q_{p_{pump}} = Qp_{Pwp} = Qp + \Delta Q,$$

Where $\Delta Q$ is the additional flow rate due to the increasing of the wear-ring clearance compared to the initial status of the pump that is provided by the theoretical Pump Head versus Flow rate curve 15. Considering that at the pump head $Hp_{Pwp}$ corresponding to the measured power and at iso-Pump Head $H = H_{th} = Hp_{Pwp}$ the Hydraulic efficiency being equal to 1, the method comprises setting 405 a hydraulic efficiency at:

$$\eta_{HY} = \frac{H}{H_{th}} = 1,$$

And comprises calculating 410 a mechanical efficiency:

$$\eta_m = \frac{P_I}{P_s} = \frac{\rho.g.Hp_{Pwp}\left(Q_p + \Delta Q\right)}{Pw_p}$$

Still considering the hydraulic efficiency:

$$\eta_{HY} = \frac{H}{H_{th}} = 1 \text{ at step } 405$$

and the mechanical efficiency:

$$\eta_m = \frac{P_I}{P_s} = \frac{\rho.g.Hp_{Pwp}\left(Q_p + \Delta Q\right)}{Pw_p}$$

at step 410 with the volumetric efficiency transformed in:

$\eta_v = \frac{Q_p}{(Q_p + \Delta Q)}$ at step 420 allows to define the efficiency due only to pump wear-ring clearance impact:

$$\eta_{wearRing} = \eta_m \times \eta_{HY} \times \eta_v = \frac{\rho.g.Hp_{Pwp}.Q_p}{Pw_p}$$

The impact of the Excessive wear-ring clearance on the overall pump wear is then calculated at 450 as:

$$\eta_{WearRingImpact} = \frac{\eta_{wearRing} - \eta_{theoretical}}{\eta_{theoretical}}$$

Where $\eta_{theoretical} = \frac{\rho.g.Hp_{th}.Q_p}{Pw_{Qp}}$ is introduced at 440.

This permits to remove the part of pump head from the theoretical pump head at a flow rate value *Qp* that has been changed due to the increasing of wear-ring clearance.

Identification of the impact of impeller wear on the characteristic is possible with measurements of pressure upstream and downstream of the pump to get the pump head Hp and mechanical power measurement since such impact is only dependent on the head losses from frictions and shocks on the blades.

The method for calculating said impeller wear effect is shown in figure 5 and done through:

- measuring 300 an actual input pressure $p_{in}$, an actual output pressure $p_{out}$ and an actual pump power *Pwp*,
- calculating 310 a theoretical flow rate $Qp_{Pwp}$ corresponding to the measured mechanical power *Pwp* 132 on a theoretical pump characteristic Pump Power versus Pump Flow rate curve 13,

Projecting 320 such theoretical flow rate $Qp_{Pwp}$ 152 on a theoretical Pump Head versus Pump Flow rate curve 15 at iso-pump flow rate $\Delta Q = 0$ to obtain a theoretical Pump Head $Hp_{Pwp}$,

- calculating 330 the actual Pump Head *Hp* from the actual input pressure $p_{in}$, and the actual output pressure $p_{out}$ and a pumped fluid density as known in the art,
- calculating 340 the loss of head due to the impeller wear as $Hp_{Pwp}$ - *Hp*.

At Iso-Pump Flow axis, the volumetric efficiency may be expressed as shown by the following formula:

$$\eta_v = 1$$

because at iso-flow, there is no consideration of $\Delta Q$, the volumetric efficiency is equal to 1.

The measured mechanical power *Pwp* is projected on the theoretical Mechanical Pump Power versus Pump Flow rate curve 13 to obtain a theoretical pump flow rate $Qp_{Pwp}$ corresponding to such mechanical power *Pwp*. Then, the theoretical Pump Flow rate is used to obtain a theoretical Head $Hp_{Pwp}$ which after calculation of the current Head Hp with the input and output pressures allows to express the hydraulic efficiency by:

$$\eta_{HY} = \frac{Hp_{th} - (Hp_{pwp} - Hp)}{Hp_{th}}$$

The mechanical efficiency at iso-flow $\Delta Q = 0$ allowing to calculate in 470:

$$\eta_m = \frac{P_I}{P_s} = \frac{\rho.g.Hp_{th}(Q_p + \Delta Q)}{Pw_{Qp}} = \frac{\rho.g.Hp_{th}.Q_p}{Pw_{Qp}}$$

Which allows to define in 480 the loss of efficiency due only to pump wear-ring clearance:

$$\eta_{impellerWear} = \eta_m \times \eta_{HY} \times \eta_v = \frac{\rho.g.\left(Hp_{th} - (Hp_{pwp} - Hp)\right).Q_p}{Pw_{Qp}}$$

considering in 475 that $\eta_v = 1$, the impact of the impeller wear on the overall pump wear is then given by:

$$\eta_{ImpellerWearImpact} = \frac{\eta_{impellerWear} - \eta_{theoretical}}{\eta_{theoretical}}$$

Where $\eta_{theoretical} = \frac{\rho.g.Hp_{th}.Q_p}{Pw_{Qp}}$ in step 490.

All these calculated data may be displayed on a monitoring computer or memorized to provide tracking of the degradation of the pump in order to provide information as per the risk of failure in predictive maintenance programs.

This allows to identify a fault related to both impeller wear or/and excessive wear-ring clearance to a predefined threshold (based on the norm: Pump Detection Tolerances ISO9906).

The method of calculating the wear data may be repeated from time to time to obtain a plurality of measurements of the global efficiency of the pump during its working life.

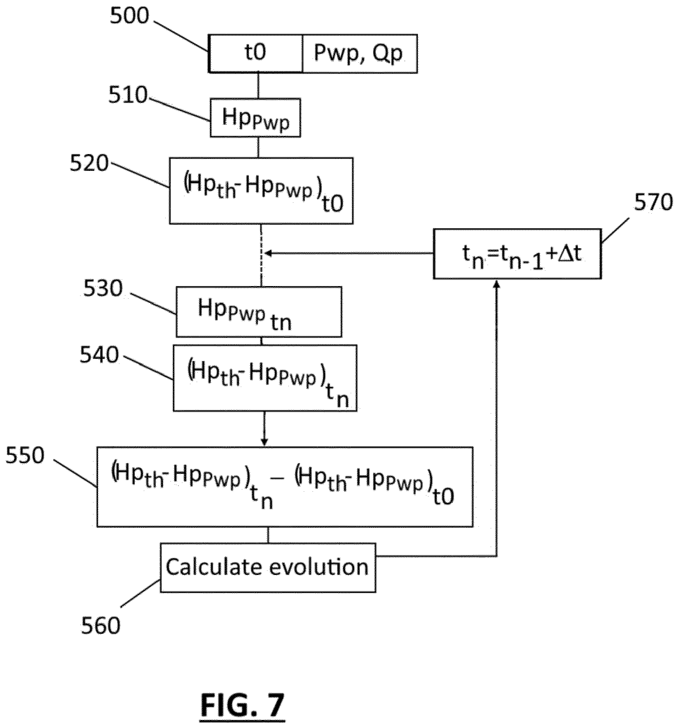

A program designed to detect an evolution of a pump wear-ring clearance evolution such as shown in figure 7 may calculate said wear-ring clearance effect through measuring the initial power and flow rate of the pump at a time t0 step 500, calculating 510 the initial Head of the pump $Hp_{Pwp}$, calculating 520 the initial loss of Head $(Hp_{th}- Hp_{pwp})_{t0}$ as an initialization phase. Then the program may measure from time to time $t_n=t_{n-1}+\Delta t$ 570, e.g. every day or week or at dedicated times within the life of the pump, with the pump in use the power and flow rate of the pump and calculate the head 530 and loss of Head 540 due to the wear-ring clearance, comparing 550 the obtained wear-ring clearance effect $(Hp_{th}- Hp_{Pwp})t_n$ with the initial Head loss to obtain a wear-ring clearance evolution 560 of the pump.

Again, this can be done periodically, and the values displayed and/or memorized to draw wear curves of the pump.

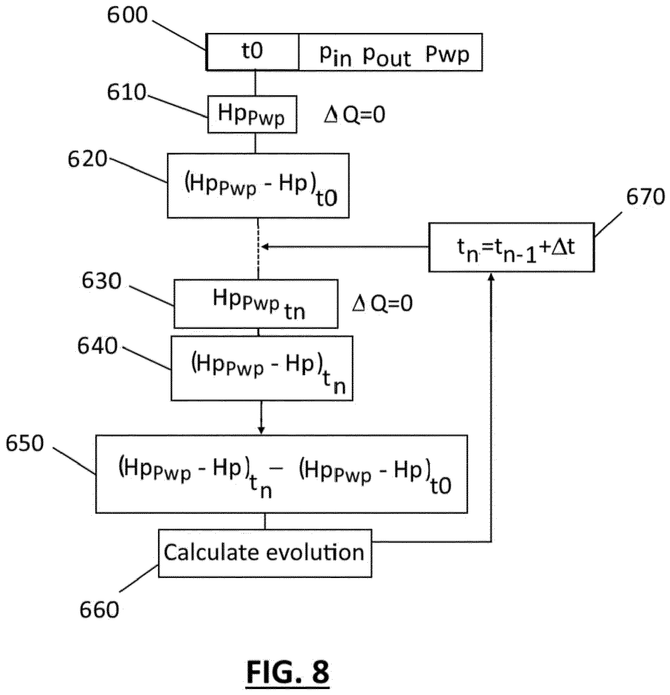

The program as depicted in figure 8 may also survey an evolution of a pump impeller wear evolution through calculating said impeller wear effect through measuring an initial input pressure $p_{int0}$, an actual output pressure $p_{outt0}$ and an initial pump power $Pwp_{t0}$ of the pump at a time t0 600 as an initialization. Then during life of the pump similarly, the program may calculate 610 the initial Head of the pump $Hp_{Pwp}$ at iso-pump flow rate $\Delta Q = 0$, calculate 620 the initial loss of Head $(Hp_{Pwp}-Hp)_{t0}$ , measuring from time to time $t_n=t_{n-1}+\Delta t$ at 670 with a volumetric efficiency set to 1 in step 675 with the pump in use the input pressure $p_{intn}$, output pressure $p_{outtn}$ and pump power $Pwp_{tn}$ of the pump and calculate the head 630 and loss of Head 640 due to the impeller wear at iso-pump flow rate $\Delta Q = 0$, compare 650 the obtained impeller wear $(Hp_{Pwp}-Hp)t_n$ with the initial Head loss to obtain a impeller wear evolution 660 of the pump.

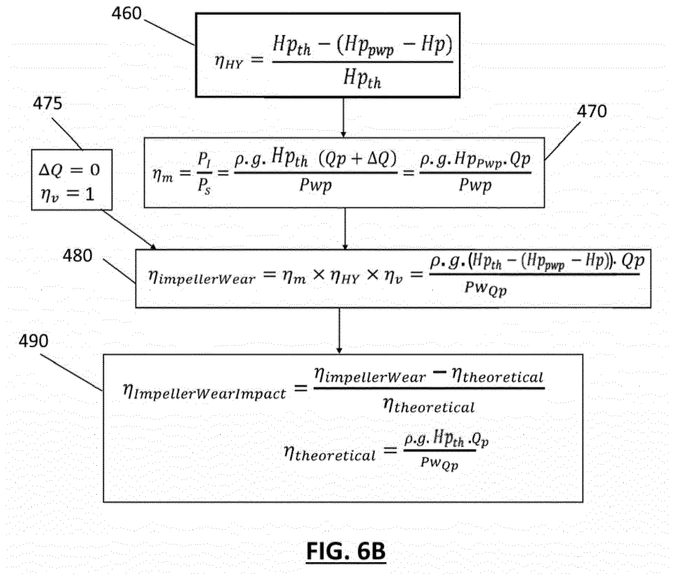

The calculations of figures 6A and 6B may also be done at each iteration of the two program parts shown in figures 7 and 8 and discussed above embedding the programs of figures 4 and 5, the measurements and calculation being preferably done in real time during operation of the pump.

It should be noted again that the actual curve Pump Mechanical Power versus Pump Flow rate 12 in figure 2A and the curve Pump Head versus Pump Flow rate 14 in figure 2B are not calculated and are shown for understanding the wear phenomena since only a working point with ($Qp$, $Pwp$) values is needed to obtain the wear-ring clearance effect and only a working point with ($Hp$, $Pwp$) values is needed to obtain the impeller wear effect at a moment in the life of the pump. The measurements and calculations provided permit to identify the impact of each part (impeller wear and wear-ring clearance) on the overall pump wear for all pump operating points as in figure 3 where curve 16 provides the percentage of performance degradation due to excessive wear-ring clearance, curve 17 shows the percentage of performance degradation due to impeller wear and curve 18 corresponds to the percentage of performance degradation due to both excessive wear-ring clearance and impeller wear.

The present disclosure provides means to identify if there is a fault related to impeller wear or wear-ring clearance separately and to identify the impact of each fault on the pump wear and performances.

Take the advantage of pump efficiency analysis to identify the problems on the mechanical part and their status.

In order to provide the theoretical curves in the program that implements the method of the present disclosure, the pump curves from the manufacturer are entered in such program in a preliminary step as such theoretical pump curves.

An identification of an evolution of the wear ring clearance is done by regularly analyzing the measurements (Power, flow rate) and calculating the wear ring clearance effect using the theoretical pump curves and calculating the mechanical efficiency, hydraulic efficiency, and volumetric efficiency to get the global efficiency at different moments of the life of the pump and to compare later values of such efficiencies with older values with the new status of wear-ring clearance.

The method also provides an identification of the evolution of the impeller wear after deducing the impact of the wear-ring clearance from the theoretical pump curve by analyzing the measurement (Power, Pump head) and the pump curve at flow rate-axis and computing the mechanical efficiency, hydraulic efficiency, and volumetric efficiency to get the global efficiency with the new status of the impeller.

The method may also comprise comparing of an actual flow rate with at least one customer defined flow rate lower limit and providing a warning signal in case of detection of a flow rate lower than said lower limit, a calculation of the impact of the degradation on the efficiency of said impeller and provision of ageing data comprising flow rate reduction and/or head reduction, a calculation of the impact of such degradation on the energy consumption of the pump.

A survey method may comprise also a program to create warning signals upon detection of defined wear-ring clearance and/or impeller wear for providing data for predictive maintenance.

An initialization method may also comprise entering said theoretical Pump mechanical Power versus Flow rate curve 13, said theoretical Head versus Flow rate curve 15 from the pump manufacturer as initial theoretical pump data in a calculation program executing the method of the disclosure.

The invention is not limited to the above description and in example, the program may be embedded in a control unit of the pump connected to sensors on the pump to get the measurement values or embedded in a remote-control center.

**Claims**

1. - Method for determining mechanical degradation of parts of a centrifugal pump having a fluid inlet (A), an impeller (2) and a fluid outlet (B), comprising:
calculating at least one of a wear-ring clearance effect and an impeller wear effect where:

calculating said wear-ring clearance effect is done through:

- measuring (200) an actual pump flow rate $Qp$ and actual pump power $Pwp$ (121),
- calculating (210) an internal flow rate of the pump $Qp_{Pwp}$ (132) through projecting said actual pump power $Pwp$ on a theoretical Pump Mechanical power versus Pump Flow rate curve (13) at iso mechanical power,
- calculating (220) the mechanical power $Pw_{Qp}$ (131) that should be used if the pump worked as specified in the theoretical curve through projecting said actual pump flow rate on said theoretical Pump Mechanical Power versus Pump Flow rate curve (13) at iso flow rate,
- applying (230) the measured flow rate $Qp$ on a theoretical Pump Head versus Pump Flow rate curve (15) to obtain a theoretical Head $Hp_{th}$ (151),
- applying (240) the internal flow rate of the pump $Qp_{Pwp}$ on said theoretical Pump Head versus Pump Flow rate curve (15) to obtain an internal Head $Hp_{Pwp}$(152),
- calculating (250) a difference between said theoretical Head and said internal Head $Hp_{th}$- $Hp_{Pwp}$ to obtain the loss of Head due to the wear-ring clearance;

And where:
calculating said impeller wear effect is done through:

- measuring (300) an actual input pressure pin, an actual output pressure pout and an actual pump power $Pwp$,
- calculating (310) a theoretical flow rate $Qp_{Pwp}$ corresponding to the measured mechanical power $Pwp$ (132) on a theoretical pump characteristic Pump Power versus Pump Flow rate curve (13),
- projecting (320) such theoretical flow rate $QpPwp$ (152) on a theoretical Pump Head versus Pump Flow rate curve (15) at iso-pump flow rate $\Delta Q = 0$ to obtain a theoretical Pump Head $HpPwp$,
- calculating (330) the actual Pump Head $Hp$ from the actual input pressure $p_{in}$, and the actual output pressure $p_{out}$ and a pumped fluid density,
- calculating a difference between said theoretical pump head and said actual pump Head $HpPwp$ - $Hp$ to obtain the loss of head due to the impeller wear.

2. - Method according to claim 1 comprising (400) calculating a flow rate inside the pump

$$Q_{p_{pump}} = Qp_{Pwp} = Qp + \Delta Q,$$

Where $\Delta Q$ is the additional flow rate due to the increasing of the wear-ring clearance compared to the initial status of the pump that is provided by the theoretical Pump Head versus Flow rate curve (15), and considering that at the pump head $Hp_{Pwp}$ corresponding to the measured power and at iso-Pump Head $H = H_{th} = Hp_{Pwp}$ the Hydraulic efficiency being equal to 1, setting (405) a hydraulic efficiency at:

$$\eta_{HY} = \frac{H}{H_{th}} = 1,$$

the method comprises:

calculating (410) a mechanical efficiency:

$$\eta_m = \frac{P_l}{P_s} = \frac{\rho.g.Hp_{Pwp}(Q_p + \Delta Q)}{Pw_p}$$

calculating (420) a volumetric efficiency:

$$\eta_v = \frac{Q_p}{(Q_p + \Delta Q)}$$

and calculating (430) the efficiency of the pump with pump wear-ring clearance impact

$$\eta_{wearRing} = \eta_m \times \eta_{HY} \times \eta_v = \frac{\rho.g.Hp_{Pwp}.Q_p}{Pw_p}$$

3. - Method for determining mechanical degradation of parts of a centrifugal pump according to claim 2 comprising calculating (440) a theoretical efficiency:

$$\eta_{theoretical} = \frac{\rho.g.Hp_{th}.Qp}{Pw_{Qp}}$$

And calculating (450) an impact of the Excessive wear-ring clearance on the overall pump as:

$$\eta_{WearRingImpact} = \frac{\eta_{wearRing} - \eta_{theoretical}}{\eta_{theoretical}}$$

4. - Method according to claim 1 wherein calculating an impeller wear impact comprises at iso-pump flow rate $\Delta Q = 0$ (460)

calculating (470) a mechanical efficiency:

$$\eta_m = \frac{P_l}{P_s} = \frac{\rho.g.Hp_{th}.(Qp + \Delta Q)}{Pw_{Qp}} = \frac{\rho.g.Hp_{th}.Qp}{Pw_{Qp}}$$

and calculating (480) the efficiency of the pump with impeller wear impact

$$\eta_{impellerWear} = \eta_m \times \eta_{HY} \times \eta_v = \frac{\rho.g.(Hp_{th} - (Hp_{pwp} - Hp)).Qp}{Pw_{Qp}}$$

where

$$\eta_{HY} = \frac{(Hp_{th} - (Hp_{pwp} - Hp))}{Hp_{th}}$$

and

a volumetric efficiency $\eta_v$ is set to 1 in step (475)

5. - Method for determining mechanical degradation of parts of a centrifugal pump according to claim 4 comprising calculating (490) the impact of the impeller wear on the overall pump wear as:

$$\eta_{ImpellerWearImpact} = \frac{\eta_{impellerWear} - \eta_{theoretical}}{\eta_{theoretical}}$$

Where

$$\eta_{theoretical} = \frac{\rho.g.Hp_{th}.Qp}{Pw_{Qp}}$$

6. - Method for determining mechanical degradation of parts of a centrifugal pump according to any one of the preceding claims repeated from time to time to obtain a plurality of measurements of the global efficiency of the pump.

7. - Method for determining mechanical degradation of parts of a centrifugal pump according to claim 6 comprising a program designed to detect an evolution of a pump wear-ring clearance evolution through calculating said wear-ring clearance effect through measuring the initial power and flow rate of the pump at a time t0 (500), calculating (510) the initial Head of the pump $Hp_{Pwp}$, calculating (520) the initial loss of Head $(Hp_{th}- Hp_{Pwp})_{t0}$, measuring from time to time $t_n=t_{n-1}+\Delta t$ (570) with the pump in use the power and flow rate of the pump and calculating the head (530) and loss of Head (540) due to the wear-ring clearance, comparing (550) the obtained wear-ring clearance effect $(Hp_{th}- Hp_{Pwp})_{tn}$ at time $t_n$ with the initial Head loss at time t0 to obtain a wear-ring clearance evolution (560) of the pump.

8. - Method for determining mechanical degradation of parts of a centrifugal pump according to claim 6 or 7 comprising identifying with said program an evolution of a pump impeller wear evolution through calculating said impeller wear effect through measuring an initial input pressure $p_{int0}$, an actual output pressure $p_{outt0}$ and an initial pump power $Pwp_{t0}$ of the pump at a time t0 (600), calculating (610) the initial Head of the pump $Hp_{Pwp}$ at iso-pump flow rate $\Delta Q = 0$, calculating (620) the initial loss of Head $(Hp_{Pwp}-Hp)_{t0}$ ,measuring from time to time $t_n=t_{n-1}+\Delta t$ (670) with the pump in use the input pressure $p_{intn}$, output pressure $p_{outtn}$ and pump power $Pwp_{tn}$ of the pump and calculating the head (630) and loss of Head (640) due to the impeller wear at iso-pump flow rate $\Delta Q = 0$, comparing (650) the obtained impeller wear $(Hp_{Pwp} - Hp)_{tn}$ with the initial Head loss to obtain a impeller wear evolution (660) of the pump.

9. - Method for determining mechanical degradation of parts of a centrifugal pump according to any one of the preceding claims wherein said measurements are done in real time during operation of the pump.

10. - Method for determining degradation of a centrifugal pump according to any one of the preceding claims comprising comparing of an actual flow rate with at least one customer defined flow rate lower limit and providing a warning signal in case of detection of a flow rate lower than said lower limit.

11. - Method for determining degradation of a centrifugal pump according to claim 10 comprising a calculation of the impact of the degradation on the efficiency of said impeller and provision of ageing data comprising flow rate reduction and/or head reduction.

12. - Method for determining degradation of a centrifugal pump according to claim 11 comprising a calculation of the impact of such degradation on the energy consumption of the pump.

13. - Method for determining degradation of a centrifugal pump according to any one of the preceding claims comprising creating warning signals upon detection of defined wear-ring clearance and/or impeller wear for providing data for predictive maintenance.

14. - Method for determining degradation of a centrifugal pump according to any one of the preceding claims comprising entering said theoretical Pump mechanical Power versus Flow rate curve (13), said theoretical Head versus Flow rate curve (15) from the pump manufacturer as initial theoretical pump data in a calculation program executing the method of any one of the preceding claims.

15. - Computer-readable non-transient recording medium on which a software is registered to implement the method according to any one of the preceding claims when the software is executed by a processor.

16. - Computer software comprising instructions to implement at least a part of a method according to any one of claims 1 to 14 when the software is executed by a processor.

**FIG. 1  PRIOR ART**

**FIG. 2A**

**FIG. 2B**

**FIG. 3**

EP 4 386 210 A1

**FIG. 4**

200 — Qp → Pwp → M

210 — $Qp_{Pwp}$

220 — $Pw_{Qp}$

230 — $Hp_{th}$

240 — $Hp_{Pwp}$

250 — $Hp_{th} - Hp_{Pwp}$

**FIG. 5**

$p_{in}$ → Pwp → $p_{out}$ → M — 300

$Qp_{Pwp}$ — 310

$Hp_{Pwp}$ — 320

Hp — 330

$Hp_{Pwp} - Hp$ — 340

**400**  $Q_{p_{pump}} = Q_{P_{Pwp}} = Q_p + \Delta Q$

**405**  $\eta_{HY} = \dfrac{H}{H_{th}} = 1$

**410**  $\eta_m = \dfrac{P_I}{P_S} = \dfrac{\rho.g.Hp_{Pwp}(Q_p + \Delta Q)}{Pw_p}$

**420**  $\eta_v = \dfrac{Q_p}{(Q_p + \Delta Q)}$

**430**  $\eta_{wearRing} = \eta_m \times \eta_{HY} \times \eta_v = \dfrac{\rho.g.Hp_{Pwp}.Q_p}{Pw_p}$

**440**  $\eta_{theoretical} = \dfrac{\rho.g.Hp_{th}.Qp}{Pw_{Qp}}$

**450**  $\eta_{WearRingImpact} = \dfrac{\eta_{wearRing} - \eta_{theoretical}}{\eta_{theoretica}}$

## FIG. 6A

460

$$\eta_{HY} = \frac{Hp_{th} - (Hp_{pwp} - Hp)}{Hp_{th}}$$

475

$$\Delta Q = 0$$
$$\eta_v = 1$$

470

$$\eta_m = \frac{P_I}{P_s} = \frac{\rho.g.\,Hp_{th}\,(Qp + \Delta Q)}{Pwp} = \frac{\rho.g.\,Hp_{Pwp}.Qp}{Pwp}$$

480

$$\eta_{impellerWear} = \eta_m \times \eta_{HY} \times \eta_v = \frac{\rho.g.\,(Hp_{th} - (Hp_{pwp} - Hp)).\,Qp}{Pw_{Qp}}$$

490

$$\eta_{ImpellerWearImpact} = \frac{\eta_{impellerWear} - \eta_{theoretical}}{\eta_{theoretical}}$$

$$\eta_{theoretical} = \frac{\rho.g.\,Hp_{th}.Q_p}{Pw_{Qp}}$$

## FIG. 6B

500 — | t0 | Pwp, Qp |

510 — $Hp_{Pwp}$

520 — $(Hp_{th} - Hp_{Pwp})_{t0}$

570 — $t_n = t_{n-1} + \Delta t$

530 — $Hp_{Pwp\,tn}$

540 — $(Hp_{th} - Hp_{Pwp})_{t_n}$

550 — $(Hp_{th} - Hp_{Pwp})_{t_n} - (Hp_{th} - Hp_{Pwp})_{t0}$

Calculate evolution

560 —

**FIG. 7**

600 ───── | t0 | $p_{in}$ $p_{out}$ $P_{wp}$ |

610 ───── | $Hp_{P_{wp}}$ | $\Delta Q = 0$

620 ───── | $(Hp_{P_{wp}} - Hp)_{t0}$ |

670

670 ───── | $t_n = t_{n-1} + \Delta t$ |

630 ───── | $Hp_{P_{wp}}{}_{t_n}$ | $\Delta Q = 0$

640 ───── | $(Hp_{P_{wp}} - Hp)_{t_n}$ |

650 ───── | $(Hp_{P_{wp}} - Hp)_{t_n} - (Hp_{P_{wp}} - Hp)_{t0}$ |

| Calculate evolution |

660

**FIG. 8**

Europäisches
Patentamt

European
Patent Office

Office européen
des brevets

# EUROPEAN SEARCH REPORT

Application Number

EP 22 30 6872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 313 197 A (ADVANCED ENERGY MONITOR SYST [GB]) 19 November 1997 (1997-11-19) | 1,4-6, 9-16 | INV. F04D1/00 |
| A | * page 1, first paragraph * <br> * page 2, last paragraph – page 5, last paragraph * <br> * page 7, fourth paragraph – page 8, first paragraph * <br> * page 9, third paragraph – page 10, first paragraph * <br> * figure 1 * | 2,3,7,8 | F04D15/00 F04D29/22 |
| X | JP 2003 028076 A (HITACHI LTD; HITACHI ENG CO LTD) 29 January 2003 (2003-01-29) * paragraphs [0007], [0011], [0017] – [0019], [0025] – [0061] * * figures 4-6, 11 * | 1,4-6,9, 13-16 | |
| X | US 2012/111114 A1 (EMDE CHRISTOPH [DE] ET AL) 10 May 2012 (2012-05-10) | 16 | |
| A | * paragraphs [0073], [0074], [0092] * * figures 1a, 1b, 10 * | 1,15 | |

TECHNICAL FIELDS SEARCHED (IPC)

F04D

The present search report has been drawn up for all claims

| Place of search | Date of completion of the search | Examiner |
|---|---|---|
| The Hague | 6 June 2023 | Gombert, Ralf |

EPO FORM 1503 03.82 (P04C01)

**EP 4 386 210 A1**

## ANNEX TO THE EUROPEAN SEARCH REPORT
## ON EUROPEAN PATENT APPLICATION NO.

EP 22 30 6872

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2023

| Patent document cited in search report | | Publication date | Patent family member(s) | | Publication date |
|---|---|---|---|---|---|
| GB 2313197 | A | 19-11-1997 | NONE | | |
| JP 2003028076 | A | 29-01-2003 | NONE | | |
| US 2012111114 | A1 | 10-05-2012 | BR | PI1007672 A2 | 02-08-2016 |
| | | | CN | 102439318 A | 02-05-2012 |
| | | | DE | 102009022107 A1 | 25-11-2010 |
| | | | DK | 2433010 T3 | 21-12-2015 |
| | | | EP | 2433010 A1 | 28-03-2012 |
| | | | ES | 2556236 T3 | 14-01-2016 |
| | | | HR | P20151394 T1 | 12-02-2016 |
| | | | HU | E028262 T2 | 28-12-2016 |
| | | | JP | 5868846 B2 | 24-02-2016 |
| | | | JP | 2012527563 A | 08-11-2012 |
| | | | PL | 2433010 T3 | 31-03-2016 |
| | | | PT | 2433010 E | 26-01-2016 |
| | | | RU | 2011151763 A | 10-07-2013 |
| | | | SI | 2433010 T1 | 29-01-2016 |
| | | | US | 2012111114 A1 | 10-05-2012 |
| | | | WO | 2010133425 A1 | 25-11-2010 |

EPO FORM P0459

For more details about this annex : see Official Journal of the European Patent Office, No. 12/82